# EUROPÄISCHE PATENTANMELDUNG

(11) **EP 2 747 526 A2**
(43) Veröffentlichungstag der Anmeldung: **25.06.2014**
(21) Anmeldenummer: 13186136.1
(22) Anmeldetag: 26.09.2013
(51) Int. Cl.: H05B 39/04, H05B 37/02

(54) **Verfahren zur Erkennung einer durch eine elektronische Steuerschaltung ansteuerbaren Lastart in einer Beleuchtungsinstallation**

(30) Priorität: 19.12.2012 DE 102012112641
(71) Anmelder: Insta Elektro GmbH, 58509 Lüdenscheid (DE)
(72) Erfinder: Krause, Karl-Heinz, 58809 Neuenrade (DE); Marks, Pierre, 58453 Witten (DE)

(57) **Zusammenfassung**

Ein Verfahren zur Erkennung einer durch eine elektronische Steuerschaltung ansteuerbaren und bezüglich ihrer Leistung einstellbaren Lastart in einer Beleuchtungsinstallation, in der verschiedene Lastarten implementiert sein können, wird derart ausgeführt, dass
- in einem ersten Schritt geprüft wird, ob die Last mit einem induktiv arbeitenden Transformator betrieben wird, indem die Netzfrequenz und der Systemtakt der Steuereinheit aufeinander abgestimmt werden und anschließend ermittelt wird, ob bei Einschalten einer Last zu einem Zeitpunkt vor einem Netzspannungsnulldurchgang und Ausschalten derselben im Zeitpunkt des Stromnulldurchganges eine Verschiebung des erwarteten Ausschaltzeitpunktes erfolgt und
- bei positivem Prüfergebnis die Steuerschaltung für eine Phasenanschnittssteuerung eingerichtet wird,
- bei negativem Prüfergebnis in einem weiteren Schritt geprüft wird, ob es sich bei der Last um eine DLT-Last handelt, wobei bei dieser Prüfung das Verhalten des Laststromes bei unterschiedlichen Steuerströmen beobachtet wird,
- bei positivem Prüfergebnis die Steuerschaltung für einen DLT-Betrieb eingerichtet wird, und
- bei negativem Prüfergebnis die Steuerschaltung für eine Phasenabschnittssteuerung eingerichtet wird.

Beschrieben ist des Weiteren eine elektronische Steuerschaltung zum Ansteuern einer bezüglich ihrer Leistung einstellbaren Last, insbesondere in einer Beleuchtungsinstallation, welche Steuerschaltung eine durch eine Ansteuerkennlinie beaufschlagte Leistungsendstufe umfasst.

## Beschreibung

Die Erfindung betrifft ein Verfahren zur Erkennung einer durch eine elektronische Steuerschaltung ansteuerbaren und bezüglich ihrer Leistung einstellbaren Lastart in einer Beleuchtungsinstallation, in der verschiedene Lastarten, wie ohmsche Lasten, mit induktiven oder mit elektronischen Transformatoren betriebene Lasten oder durch DLT angesteuerte Lasten, implementiert sein können. Des Weiteren betrifft die Erfindung eine elektronische Steuerschaltung zum Ansteuern einer bezüglich ihrer Leistung einstellbaren Last, insbesondere in einer Beleuchtungsinstallation, welche Steuerschaltung eine durch eine Ansteuerkennlinie beaufschlagte Leistungsendstufe umfasst.

Beleuchtungsinstallationen werden typischerweise ausgelegt und eingerichtet, um mit einer vorgegebenen Lastart zu arbeiten. Im Rahmen der Beleuchtungsinstallation verwendete Dimmer sind dementsprechend ausgelegt, um die darin eingebundene Lastart dimmen zu können. Eingesetzt werden im Rahmen einer Beleuchtungsinstallation konventionelle ohmsche Lasten: herkömmliche Glühlampen oder Hochvolthalogenlampen, Lasten, die mit konventionellen Trafos betrieben werden, und Lasten, die mit elektronischen Transformatoren (so genannten Schaltnetzteilen) betrieben werden oder auch Lasten, die mittels des relativ neu entwickelten DLT-Verfahrens angesteuert werden. Bei den genannten Lasten handelt es sich um Lampen oder Lampenbaugruppen, da diese mitunter auch über elektronische Baugruppen verfügen. Bei dem DLT-Verfahren handelt es sich um ein Lampenansteuerungsverfahren gemäß der Norm IEC-62756-1, Edition 1: "Digital load side transmission lighting control". Das in dieser Norm beschriebene Verfahren bzw. die darin beschriebenen Lasten sind im Rahmen dieser Ausführungen mit DLT-Verfahren bzw. DLT-Lasten angesprochen. Gemäß dem DLT-Verfahren wird über die Wechselnetz-spannung die notwendige Ansteuerungsinformation für den gewünschten Betrieb der Lampe bzw. Lampeneinheit an ein lampenseitiges Steuergerät übermittelt, welches sodann das eigentliche Leuchtmittel - die Lampe - entsprechend der übertragenen Information und in dem dementsprechenden Leuchtenbetrieb ansteuert.

Nicht gänzlich ungewöhnlich ist es, dass nach der Installation eines vordefinierten Beleuchtungsinstallationssystems Lastarten gewechselt werden sollen, beispielsweise durch Ersetzten einer durch einen konventionellen Transformator betriebenen Lampe oder Lampenanordnung durch einen Betrieb mittels eines elektronischen Transformators oder durch eine DLT-Lampeneinheit. Problematisch ist, dass für die unterschiedlichen Lastarten unterschiedliche Ansteuerungen notwendig sind, um ein vor allem flacker-freies Dimmen zu erzielen. Lampen oder Lampeneinheiten, deren Stromversorgung über einen induktiven Transformator erfolgt, werden durch eine Phasenanschnittsteuerung gedimmt. Lampen oder Lampenanordungen, die hingegen mit einem elektronischen Vorschaltgerät betrieben werden, werden durch eine Phasenabschnittssteuerung bezüglich ihrer Helligkeit geregelt. Wiederum anders ist die Ansteuerung von DLT-Lasten. Aus diesem Grunde hat üblicherweise ein Wechsel der Lastart in einer Beleuchtungsinstallation ebenfalls einen Wechsel des oder der dieser Lastart zugeordneten Dimmer zur Folge.

Aus DE 197 51 828 A1 ist ein Verfahren bekannt, mit dem zwischen zwei in einer Beleuchtungsinstallation vorhandenen Lastarten unterschieden werden kann, und zwar zwischen Lasten, die mit einem induktiven Transformator betrieben werden und anderen Lasten. Dieses Verfahren ist bei Dimmern implementiert, die im Rahmen eines Überprüfungsalgorithmus diese beiden Lastarten unterscheiden können, um sodann in Abhängigkeit von der festgestellten Lastart die elektronische Steuerschaltung des Dimmers entsprechend für den Betrieb der detektierten Lastart einzurichten. Bei der im Zuge dieses Verfahren erfolgenden Prüfung wird zunächst geprüft, ob die Last mit einem induktiven Transformator betrieben wird. Bei positivem Prüfergebnis wird die elektronische Dimmersteuerschaltung zum Ansteuern der Last in den Modus "Phasenanschnittssteuerung" geschaltet. Ergibt diese Prüfung, dass es sich bei der Lastart nicht um einen induktiven Transformator handelt, wird die elektronische Dimmersteuerschaltung in den Modus "Phasenabschnittsteuerung" geschaltet.

Zum Betreiben insbesondere von in zunehmendem Umfange eingesetzten Kompaktleuchtstofflampen und LED-Lampen ist jedoch weder eine Phasenanschnittsteuerung noch einen Phasenabschnittssteuerung geeignet, um ein flackerfreies Dimmen zu erlauben. Ein Dimmen derartiger Lampen ist mit dem so genannten DLT-Verfahren möglich, wie dieses in der vorbeschriebenen Norm sowie in DE 10 2009 051 968 A1 beschrieben ist. Daher bedarf es bei einer Umrüstung einer in einem Gebäudeinstallations-system befindlichen phasenan- oder phasenabschnittsgesteuerten Last auf eine gemäß dem DLT-Verfahren ansteuerbare Last auch eines Austausches des oder der dazugehörigen Dimmer.

Ausgehend von diesem diskutierten Stand der Technik liegt der Erfindung daher die Aufgabe zugrunde, ein eingangs genanntes Verfahren dergestalt weiterzubilden, dass auf möglichst einfache Art und Weise eine Detektion mit der sich nicht nur durch Phasenanschnitt oder Phasenabschnitt ansteuerbare Lasten voneinander unterscheiden lassen, sondern welches auch eine Identifizierbarkeit von gemäß dem DLT-Verfahren angesteuerten Lampeneinheiten gestattet, welches Verfahren insbesondere zur Verwendung in einem Dimmer möglich ist.

Gelöst wird diese Aufgabe erfindungsgemäß durch ein eingangs genanntes, gattungsgemäßes Verfahren, bei dem
- in einem ersten Schritt geprüft wird, ob die Last mit einem induktiv arbeitenden Transformator betrieben wird, indem die Netzfrequenz und der Systemtakt der Steuereinheit aufeinander abgestimmt werden und anschließend ermittelt wird, ob bei Einschalten einer Last zu einem Zeitpunkt vor einem Netzspannungsnulldurchgang und Ausschalten derselben im Zeitpunkt des Stromnulldurchganges eine Verschiebung des erwarteten Ausschaltzeitpunktes erfolgt und
- bei positivem Prüfergebnis die Steuerschaltung für eine Phasenanschnittssteuerung eingerichtet wird,
- bei negativem Prüfergebnis in einem weiteren Schritt geprüft wird, ob es sich bei der Last um eine DLT-Last handelt, wobei bei dieser Prüfung das Verhalten des Laststromes bei unterschiedlichen Steuerströmen beobachtet wird,
- bei positivem Prüfergebnis die Steuerschaltung für einen DLT-Betrieb eingerichtet wird, und
- bei negativem Prüfergebnis die Steuerschaltung für eine Phasenabschnittssteuerung eingerichtet wird.

Bei diesem Verfahren wird in einem Schritt geprüft, ob an das beispielsweise als Dimmer ausgelegte Ansteuergerät ein induktiv arbeitender Transformator angeschlossen bzw. der Dimmer zum Ansteuern einer durch einen induktiv arbeitenden Transformator bestromten Last, insbesondere einer Lampe vorgesehen ist. Diese Prüfung erfolgt prinzipiell, wie dieses in DE 197 51 828 A1 beschrieben ist. Durch die vorstehende explizite Inbezugnahme von DE 197 51 828 A1 wird der Inhalt dieses Dokumentes zum Inhalt dieser Ausführungen gemacht. Handelt es sich bei der Last um einen induktiv arbeitenden Transformator, wird die Steuerschaltung für eine Phasenanschnittsteuerung eingerichtet. Dieses Einrichten erfolgt durch Schalten einer oder mehrere Laststufen der elektronischen Steuerschaltung in ihren ENABLE-Modus. Die Ansteuerung der Last durch den Dimmer erfolgt fortan in dem Modus "Phasenanschnittssteuerung".

Ist das Prüfergebnis dieses ersten Prüfungsschrittes negativ, d. h.: es wurde nicht das Vorhandensein eines induktiv arbeitenden Transformators als Last festgestellt, wird in einem nachfolgenden Schritt geprüft, ob es sich bei der Last um eine gemäß dem DLT-Verfahren ansteuerbare Last handelt, diese mithin über eine hierzu notwendige lastseitige Steuereinheit verfügt. Die Prüfung auf das mögliche Vorhandensein einer DLT ansteuerbaren Last erfolgt durch Ansteuern der Last mit Steuerströmen und Überwachung des Verhaltens des Laststromes. Bei dieser Prüfung werden unterschiedliche Steuerströme eingespeist, die sich in einer entsprechenden Änderung in dem Laststrom bemerkbar machen und steuergeräteseitig, also beispielsweise dimmerseitig erkannt werden können. Es wird also geprüft, ob eine Reaktion der Last bei einem Ansteuerungswechsel, beispielsweise zwischen dem Befehl für volle Helligkeit und demjenigen für eine geringe Helligkeit vorliegt. Wird bei diesem zweiten Lastartprüfungsschritt festgestellt, dass die an den Dimmer angeschlossene Lastart eine gemäß dem DLT-Verfahren ansteuerbare Last ist, wird die elektronische Steuerschaltung für einen Betrieb in dem Modus "DLT-Betrieb" eingerichtet.

Führt dieser zweite Prüfungsschritt zu einem negativen Resultat, d. h.: das Vorhandensein einer gemäß dem DLT-Verfahren ansteuerbaren Last konnte nicht detektiert werden, wird die elektronische Steuerschaltung auf den Ansteuerungsmodus "Phasenabschnittssteuerung" eingerichtet. In diesem Ansteuerungsmodus lassen sich die weiteren möglichen Lastarten, beispielsweise Lampen oder Lampeneinheiten, die durch ein elektronisches Steuergerät mit Strom versorgt werden, herkömmliche Glühlampen oder etwa Hochvolthalogenlampen dimmen.

In geschickter Weise werden bei diesem Verfahren die Eigenarten unterschiedlicher Lastarten für deren Identifizierung genutzt, um eine sichere Lastarterkennung durchführen zu können. Daher eignet sich dieses Verfahren für eine automatische Lastarterkennung, ohne dass hierzu durch manuelles Einwirken besondere Prüf- oder Einmessschritte vorgenommen werden müssten. Von besonderem Vorteil ist, dass sich dieses Verfahren ohne weiteres in eine Dimmerschaltung implementieren lässt, welcher die für den unterschiedlichen Dimmbetrieb notwendigen Baugruppen aufweist. Daher kann unter Verwendung dieses Verfahrens ein Universaldimmer bereitgestellt werden. Ein Wechsel der Lastart in einer Beleuchtungsinstallation kann somit vorgenommen werden, ohne den oder die die Lasten ansteuernden Dimmer auswechseln zu müssen. Notwendig ist allein der Schritt, dass sich ein solcher Dimmer neu einrichtet, mithin das vorbeschriebene Lastarterkennungsverfahren durchführt. Typischerweise wird man einen solchen Dimmer derart einrichten, dass das vorbeschriebene Lastarterkennungsverfahren immer dann durchgeführt wird, wenn nach einer Stromunterbrechungsphase die Beleuchtungsinstallation eingeschaltet wird. Ausgenutzt wird hierbei, dass bei einer Änderung der Lastart in einer Beleuchtungsinstallation diese regelmäßig für den Vorgang der Änderung stromlos geschaltet wird.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:

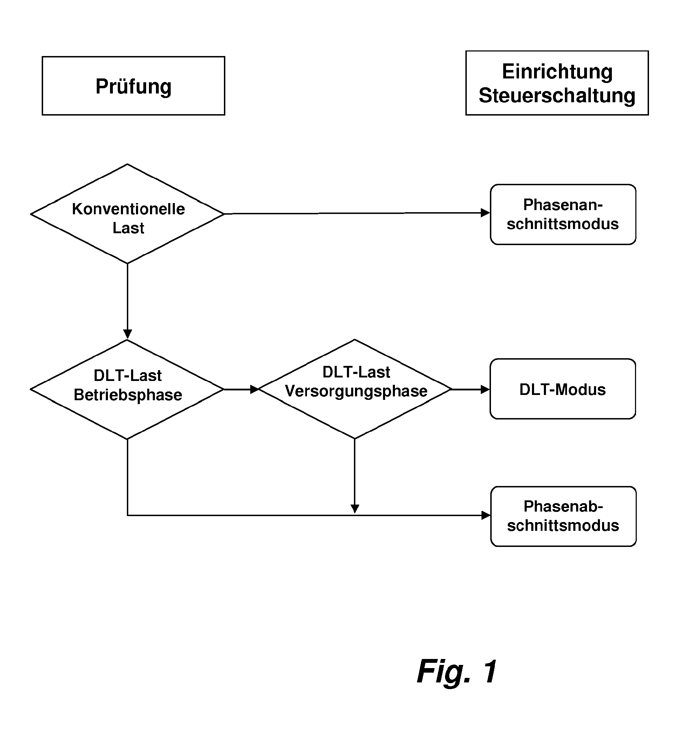

- **Fig. 1:**: ein Flussdiagramm zum Erläutern des beanspruchten Lastarterkennungsverfahrens,
- **Fig. 2:**: eine schematisierte Darstellung nach Art eines Blockschaltbildes eines Ausschnittes einer elektronischen Steuerschaltung zum Ansteuern eines Beleuchtungsmittels einer Beleuchtungsinstallation und
- **Fig. 3:**: ein Diagramm, darstellend die verbesserte Flankenbildung bei einer Kombination unterschiedlicher, in der elektronischen Steuerschaltung vorhandenen Ansteuerkennlinien.

Ein elektronisch ausgeführter Dimmer als Steuergerät zum Ansteuern einer Last ist ausgelegt, damit von diesem eine Lastarterkennung durchgeführt werden kann, um in Abhängigkeit von dem Prüfergebnis den Dimmer bzw. dessen elektronische Steuerschaltung in den jeweiligen, für eine Lastart vorbestimmten Dimmerbetrieb zu schalten bzw. dementsprechend einzurichten. Unterschieden werden sollen mit dieser Lastartprüfung konventionelle Lastarten, also Lasten, die mit induktiven Transformatoren betrieben werden, von solchen, die mit elektronischen Vorschaltgeräten betrieben werden. Zu unterscheiden sind ebenso Lasten, die gemäß dem DLT-Verfahren angesteuert werden. Dementsprechend wird der Dimmer bzw. seine elektronische Steuerschaltung in Abhängigkeit von dem Ergebnis der Lastartprüfung in einen der Modi "Phasenanschnittsmodus", "Phasenabschnittsmodus" oder "DLT-Modus" geschaltet.

In einem ersten Schritt der Lastartprüfung wird geprüft, ob der Dimmer zum Ansteuern einer mit einem induktiven Transformator betriebenen Last geschaltet ist. Dieser erste Prüfungsschritt wird durchgeführt, indem die Netzfrequenz und der Systemtakt der Steuereinheit aufeinander abgestimmt werden und anschließend ermittelt wird, ob bei Einschalten einer Last zu einem Zeitpunkt vor einem Netzspannungsnulldurchgang und Ausschalten derselben im Zeitpunkt des Stromnulldurchganges eine Verschiebung des erwarteten Ausschaltzeitpunktes erfolgt. Dieses Verfahren wird im Weiteren durchgeführt, wie dieses in DE 197 51 828 A1 beschrieben ist, weshalb bezüglich weiterer Details dieses ersten Prüfungsschrittes auf die Ausführungen in dem vorgenannten Dokument verwiesen wird, die hier gleichermaßen durchgeführt werden.

Ist das Prüfergebnis positiv, das heißt: Es wurde das Vorhandensein eines induktiven Transformators detektiert, wird die elektronische Steuerschaltung in ihren Phasenanschnittsmodus geschaltet.

Ist das Prüfergebnis negativ, das heißt: Durch die Prüfung konnte kein induktiver Transformator als durch den Dimmer angesteuert erkannt werden, wird ein zweiter Prüfschritt durchgeführt. Bei diesem zweiten Prüfschritt wird geprüft, ob der Dimmer zum Ansteuern einer DLT-Last vorgesehen ist. Diese Prüfung erfolgt in der Betriebsphase der DLT-Last, und zwar indem dimmerseitig das Verhalten des Laststromes bei Beaufschlagung der Last mit unterschiedlichen Steuerströmen beobachtet wird. Mithin wird bei dieser Prüfung überwacht, ob die Höhe des Laststroms sich durch einen Dimmvorgang verändert und damit, ob die Last auf die DLT-Ansteuerung reagiert. Es wird also geprüft, ob die übertragene Ansteuerinformation durch Vorhandensein einer lastseitig angeordneten Empfängereinheit ausgelesen und umgesetzt wird. Dieses erfolgt gemäß einem Ausführungsbeispiel der Erfindung unter Verwendung eines Komparators. Gemessen wir die Zeit innerhalb einer Halbwelle, in der der Strom den Schwellwert des Komparators überschreitet. Bleibt diese Zeit beim Dimmen über DLT annähernd konstant, ist keine DLT-Last angeschlossen. Das Prüfergebnis wäre in einem solchen Fall negativ.

Gemäß einer Weiterbildung bei der Verwendung eines Komparators ist vorgesehen, die Schwelle des Komparators einrichtbar auszulegen. Bei einer solchen Ausgestaltung kann sodann eine Änderung des Stromes auch dann erkannt werden, wenn eine unveränderte Grundlast parallel zur DLT-Last vorhanden ist. Einrichtbar hinsichtlich seines Schwellenwertes ist ein solcher Komparator beispielsweise dann, wenn dieser Bestandteil eines Mikrokontrollers ist.

Für den Fall, dass das Prüfergebnis positiv ist, das heißt: Die gemäß dem DLT-Verfahren angesteuerte Last reagiert, was sich wiederum in einer entsprechenden Änderung im Laststrom bemerkbar gemacht hat oder wenn die gemessene Stromhöhe aufgrund der Höhe der angeschlossenen Last im Bereich der Minimallast keine auswertbaren Ergebnisse geliefert hat, wird in einem zweiten, optionalen Schritt an einer zusätzlichen Messstelle in der Stromversorgung die Stromversorgungsphase innerhalb einer Halbwelle durch die Last überwacht. Auch diese Detektion kann dimmerseitig vorgenommen werden. Für diese Prüfung bedarf es keiner zusätzlichen Messstelle. Durchgeführt wird diese Überwachung mittels des für einen DLT-Betrieb vorhandenen Controllers. Entsprechend der Auslegung der DLT-Ansteuerung und dem Vorsehen der Stromversorgungsphase in einer Halbwelle, kann auch dieses erfasst und für die vorbeschriebenen Zwecke ausgewertet werden. Dieser Umstand kann bei dieser Prüfung genutzt werden, um eine gewisse Redundanz in Bezug auf die Prüfung "DLT-Last" zu erzeugen. Bei positivem Prüfergebnis, das heißt: Wenn die Last einen Stromfluss der erwarteten Höhe in der DLT-Stromversorgungsphase ermöglicht, wird die elektronische Steuerschaltung in den DLT-Mo-dus geschaltet.

Ist das Ergebnis der Prüfung "DLT-Last" entweder bei dem Schritt "Betriebsphasenprüfung" oder bei dem Schritt "Stromversorgungsphasenprüfung" negativ, wird die elektronische Steuerschaltung in ihren Phasenabschnittsmodus geschaltet.

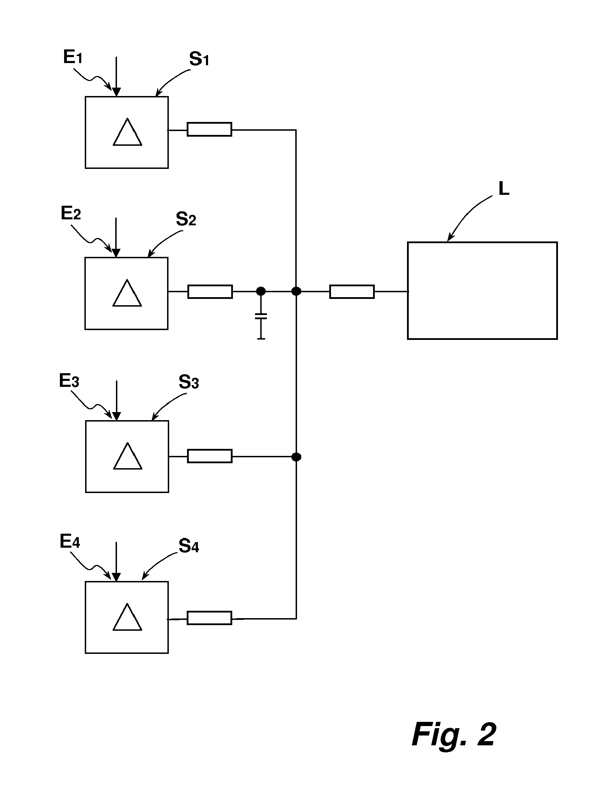

Die elektronische Steuerschaltung verfügt zum Ansteuern der unterschiedlichen Lastarten und damit für die Einrichtung der unterschiedlichen Betriebsmodi über mehrere Ansteuerkennlinien (Laststufen) zum Ansteuern einer Leistungsendstufe. Schematisiert ist dieser Teil der elektronischen Steuerschaltung in Figur 2 gezeigt. Bei dem dargestellten Ausführungsbeispiel sind beispielhaft vier unterschiedliche Stufen S₁, S₂, S₃, S₄ zum Bereitstellen unterschiedlicher Ansteuerkennlinien vorgesehen. Diese sind an einen gemeinsamen Eingang einer Leistungsendstufe L angeschlossen. Jede Stufe S₁, S₂, S₃, S₄ verfügt über einen ENABLE-Eingang E₁, E₂, E₃, E₄. Über den Eingang E₁, E₂, E₃, E₄ kann die jeweilige Stufe S₁, S₂, S₃, S₄ aktiv geschaltet werden.

Zum Betrieb des Dimmers werden je nach dem eingerichteten bzw. geschalteten Betriebsmodus ein oder mehrere Stufen S₁, S₂, S₃, S₄ zur Beaufschlagung der Leistungsendstufe L geschaltet. Das Vorhandensein mehrerer unterschiedlicher Stufen S₁, S₂, S₃, S₄ erlaubt eine Beaufschlagung der Leistungsendstufe L nicht nur durch eine einzelne Stufe S₁, S₂, S₃ oder S₄, sondern auch durch eine Kombination einzelner Stufen S₁, S₂, S₃, S₄ miteinander, um die gewünschte Flankensteilheit bei der Datenübertragung zu erzeugen und um diese zu verbessern. Dabei ist es möglich, einzelne oder auch alle Stufen S₁, S₂, S₃, S₄ gleichzeitig in ihren ENABLE-Modus zu schalten oder zum Erzeugen einer einzigen Flanke mehrere Stufen S₁, S₂, S₃, S₄ einzeln oder in Kombination miteinander zeitlich aufeinander abfolgend in ihren ENABLE-Modus zu schalten. Auf diese Weise wird zum Ausbilden einer Flanke die Leistungsendstufe L in einer vorgegebenen Abfolge mit unterschiedlichen Kennlinien angesteuert. Dieses erlaubt in besonderer Weise die Ausbildung sehr steiler Flanken, ohne dabei die Funkstörung zu vergrößern. Vielmehr wird diese durch eine geeignete Abfolge von Ansteuerkennlinien trotz größerer Flankensteilheit reduziert. Mithin wird durch eine solche Maßnahme die in dem Dimmer erzeugte Verlustleistung reduziert.

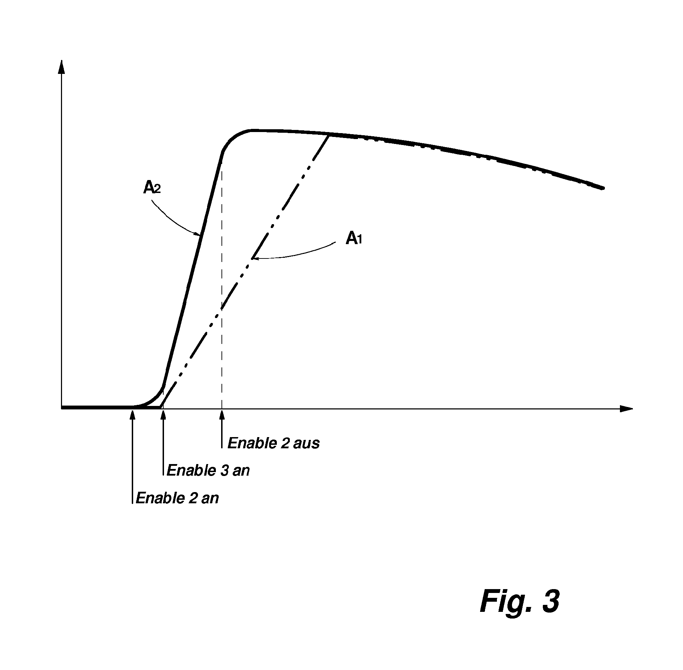

Figur 3 zeigt ein Diagramm, welches den Verlauf der Steuerstromkurve zeigt, wenn die Leistungsendstufe L mit einer einzigen Ansteuerkennlinie eine der Stufen S₁, S₂, S₃, S₄ angesteuert wird, wie dieses herkömmlich vorgenommen worden ist. Diese Kurve ist in dem Diagramm der Figur 3 mit A₁ markiert. Dieser Kurve A₁ ist in dem Diagramm die Kurve A₂ gegenübergestellt. Die Kurve A₂ zeigt den Stromverlauf bei einem Betrieb der Ansteuerschaltung, wenn die Leistungsendstufe L in zeitlicher Abfolge durch die Ansteuerkennlinien unterschiedlicher Stufen S₁, S₂, S₃, S₄ oder unterschiedlicher Stufenkombinationen beaufschlagt wird. Beispielhaft ist in Figur 3 eine Ansteuerung durch die Stufen S₂ und S₃ gezeigt. In einem ersten kurzen Zeitintervall wird die Ansteuerungskennlinie der Stufe S₂ verwendet (in dem Diagramm durch "ENABLE 2 an" kenntlich gemacht). Anschließend wird die Leistungsendstufe L mit der Ansteuerkennlinie einer weiteren Stufe, hier der Stufe S₃ beaufschlagt, zu erkennen in dem Diagramm der Figur 3 durch "ENABLE 3 an".

Nach Zuschalten der Stufe S₃ wird somit die Leistungsendstufe L durch beide Stufen S₂, S₃ angesteuert. Nach einer vorgegebenen Zeitspanne oder nach Erreichen eines bestimmten Stromniveaus wird die Stufe S₂ ausgeschaltet ("ENABLE 2 aus"). Deutlich erkennbar sind in der resultierenden Kurve A₂ die kontinuierlichen Übergänge erkennbar. Hierdurch reduzieren sich die im Dimmer erzeugten Schaltverluste.

Vor dem Hintergrund, dass bei dem beschriebenen Dimmer aufgrund seiner unterschiedlichen Betriebsmodi mehrere, Ansteuerkennlinien beinhaltenden Stufen umfassen muss, können die einzelnen Stufen nicht nur dasjenige wiedergeben, was für jeden einzelnen Betriebsmodus benötigt wird. Vielmehr können durch die vorbeschriebene Möglichkeit einer Kombination unterschiedlicher Stufen zur Beaufschlagung einer Leistungsendstufe bei der Auslegung der elektronischen Steuerschaltung durchaus auch Stufen eingespart werden, die sodann durch eine Kombination anderer Stufen ebenso abgebildet werden können.

Auch wenn die vorstehenden Ausführungen zu der Ausgestaltung der die Ansteuerkennlinien beinhaltenden Stufen und die Ansteuerung der Leistungsendstufe durch diese anhand eines Dimmers im Zusammenhang mit seinen unterschiedlichen Betriebsmodi beschrieben worden ist, wird deutlich, dass sich eine solche Schaltungsanordnung und ein solches Verfahren zum Verbessern der Flankensteilheit sowie zum Reduzieren der Verlustleistung auch bei anderen Anwendungen einsetzen lässt, vor allem solchen, bei denen möglichst steile Flanken bei möglichst geringer Funkstörung erzeugt werden sollen.

## Patentansprüche

1. Verfahren zur Erkennung einer durch eine elektronische Steuerschaltung ansteuerbaren und bezüglich ihrer Leistung einstellbaren Lastart in einer Beleuchtungsinstallation, in der verschiedene Lastarten implementiert sein können, **dadurch gekennzeichnet, dass**
- in einem ersten Schritt geprüft wird, ob die Last mit einem induktiv arbeitenden Transformator betrieben wird, indem die Netzfrequenz und der Systemtakt der Steuereinheit aufeinander abgestimmt werden und anschließend ermittelt wird, ob bei Einschalten einer Last zu einem Zeitpunkt vor einem Netzspannungsnulldurchgang und Ausschalten derselben im Zeitpunkt des Stromnulldurchganges eine Verschiebung des erwarteten Ausschaltzeitpunktes erfolgt und
- bei positivem Prüfergebnis die Steuerschaltung für eine Phasenanschnittssteuerung eingerichtet wird,
- bei negativem Prüfergebnis in einem weiteren Schritt geprüft wird, ob es sich bei der Last um eine DLT-Last handelt, wobei bei dieser Prüfung das Verhalten des Laststromes bei unterschiedlichen Steuerströmen beobachtet wird,
- bei positivem Prüfergebnis die Steuerschaltung für einen DLT-Betrieb eingerichtet wird, und
- bei negativem Prüfergebnis die Steuerschaltung für eine Phasenabschnittssteuerung eingerichtet wird.

2. Verfahren nach Anspruch 1, **dadurch gekennzeichnet, dass** bei der Prüfung des Vorhandenseins einer DLT-Last der Laststromprüfung nachgeschaltet eine Zusatzprüfung in der Stromversorgungsphase ausgeführt wird.

3. Verfahren nach Anspruch 1 oder 2, **dadurch gekennzeichnet, dass** der Schritt des Prüfens des Vorhandenseins eines induktiven Transformators durchgeführt wird, wie dieses in DE 197 51 828 A beschrieben ist.

4. Verfahren nach einem Ansprüche 1 bis 3, **dadurch gekennzeichnet, dass** die elektronische Steuerschaltung zum Ansteuern der Last mehrere Laststufen (S₁, S₂, S₃, S₄) umfasst und in Abhängigkeit von der ermittelten Lastart eine oder mehrere Laststufen (S₁, S₂, S₃, S₄) zur Beaufschlagung einer Leistungsendstufe (L) in ihren ENABLE-Modus geschaltet werden.

5. Verfahren nach einem der Ansprüche 1 bis 4, **dadurch gekennzeichnet, dass** die elektronische Steuerschaltung zum Ansteuern der Last mehrere Laststufen (S₁, S₂, S₃, S₄) umfasst und zum Ansteuern einer Last nacheinander unterschiedliche Laststufen (S₁, S₂, S₃, S₄) durch Schalten einzelner oder mehrere Laststufen (S₁, S₂, S₃, S₄) zur Beaufschlagung einer Leistungsendstufe (L) in ihren ENABLE-Modus geschaltet werden.

6. Elektronische Steuerschaltung zum Ansteuern einer bezüglich ihrer Leistung einstellbaren Last, insbesondere in einer Beleuchtungsinstallation, welche Steuerschaltung eine durch eine Ansteuerkennlinie beaufschlagte Leistungsendstufe (L) umfasst, **dadurch gekennzeichnet, dass** an den Eingang der Leistungsendstufe (L) mehrere, jeweils eine unterschiedliche Ansteuerkennstufe bereitstellende Laststufen (S₁, S₂, S₃, S₄) angeschlossen sind, wobei jede Laststufe (S₁, S₂, S₃, S₄) über einen ENABLE-Eingang (E₁, E₂, E₃, E₄) zum Aktivschalten dieser Laststufe (S₁, S₂, S₃, S₄) verfügt, und dass der Steuerschaltung eine Steuereinheit zugeordnet ist, mit der die ENABLE-Eingänge (E₁, E₂, E₃, E₄) schaltbar sind.
